# EUROPEAN PATENT APPLICATION

(11) **EP 1 672 848 A1**
(43) Date of publication of application: **21.06.2006**
(21) Application number: 04029738.4
(22) Date of filing: 15.12.2004
(51) Int. Cl.: H04L 12/46

(54) **L3 VLAN reuse with L2 forwarding prevention to increase effective number of IP VLANs**

(71) Applicant: SIEMENS AKTIENGESELLSCHAFT, 80333 München (DE)
(72) Inventor: Lee, Seungdong, Eunpyeong Seoul 122-751 (KR)

(57) **Abstract**

Configuring a switch having an input port and output ports. The output ports are configurable by assigning an ID to a respective output port corresponding to a network The same ID is allocated to different output ports corresponding to respective networks. Communication is suppressed between those output ports sharing the same ID.

## Description

In Metropolitan Area Networks (MANs), the Ethernet has the potential to cost-effectively increase network capacity and offer a wide range of service offerings in a scalable, simple, and flexible manner. An Ethernet based MAN is generally termed a Metro Ethernet Network (MEN). The Metro Ethernet Networks provide connectivity services across a Metro geography utilizing Ethernet as the core protocol and enabling broadband applications. In particular, the Metro Ethernet Network bridges or connects geographically separated enterprise LANs while also connecting across the WAN or backbone networks that are generally owned by service providers.

As the spread of MEN continues, traditional routers are being replaced with Layer 3 (L3) Ethernet switches. One reason for this is the ability of L3 switching to support Virtual Local Area Networks (VLANs) that have the advantage that they are logically configured, thereby allowing the VLANs to be configured and reconfigured freely and without restriction to geographical location.

However, the traditional router hosted some logistical advantages that would be desirable to retain. In router based network designs, for example, a small router was situated at the boundary of the local area network and connected to the service provider's router through the Wide Area Network (WAN) connection. If the WAN connection is frame-relay or ATM capable, the provider edge router can have multiple sub-interfaces per physical port. The Metro Ethernet based network design enables similar sub-interface concepts with the 802.1Q tagged VLAN, which is used by many service providers to aggregate subscriber's L2 network directly to provider edge L3 switches. This configuration is similar to a virtual circuit that is devised to share a single physical connection with logically split virtual channels.

By the same token, because the 802.1Q tagged VLANs are terminated at the L3 switch, the L3 switch has a large number of VLANs that it must provide L3 forwarding service. The typical L3 switching chipset employed supports 802.1Q. While these chipsets promise adequate support, in practice they fall way short of being capable of supporting the number of L3 VLANs required for typical systems. One recent Ethernet switch chipset boasts that it supports 4k L2 VLANs. On the contrary, the number of L3 VLANs is limited in practice and results in, for example, 32 or 64 VLANs.

One solution available is to procure an expensive L3 switch that supports a large number of L3 VLANs. Practically, considering the huge number of L3 switches that would be required, the cost to provide such expensive switches would be extremely cost prohibitive. The only other solution would be to provide a multiplicity of less expensive L3 switches. While this last solution may prove viable, the costs may not be as low as one would expect especially as MEN grow and require large numbers of such L3 switches.

What is needed is a new solution that obviates the previous solutions disadvantages. What is lacking is a cost-effective solution that support a sufficient number of L3 VLANs. A solution is needed that is not complex and may be implemented using the evolving L3 technology.

### SUMMARY & OBJECTS OF THE INVENTION

An object of the invention is to provide a switch.

An object of the invention is to provide a layer 3 switch.

An object of the invention is to provide additional VLANs.

An object of the invention is to minimize the number of ports required to support VLANs.

An object of the invention is to provide a cost effective solution for increasing the number of VLANs in a growing MAN.

In view of the foregoing objectives there is provided a method for configuring a switch having an input port and output ports. The output ports are configurable by assigning an ID corresponding to a network to a respective output port. The same ID is allocated to different output ports corresponding to respective networks. Communication is suppressed between those output ports sharing the same ID.

There is further provided an apparatus for maximizing a number of networks connected to a switch. A switch switches IP packets and has an input port and output ports, the output ports corresponding to respective networks. The output ports are configurable by assigning an ID to a respective output port corresponding to a different network. At least 2 output ports are configured to share the same ID.

With the solution provided herein the problems of the previous techniques are obviated.

### BRIEF DESCRIPTION OF THE DRAWINGS

Figure 1 illustrates the switch configuration of the traditional method; and
Figure 2 illustrates the switch configuration of the present invention.

### DETAILED DESCRIPTION OF THE PREFERRED EMBODIMENTS

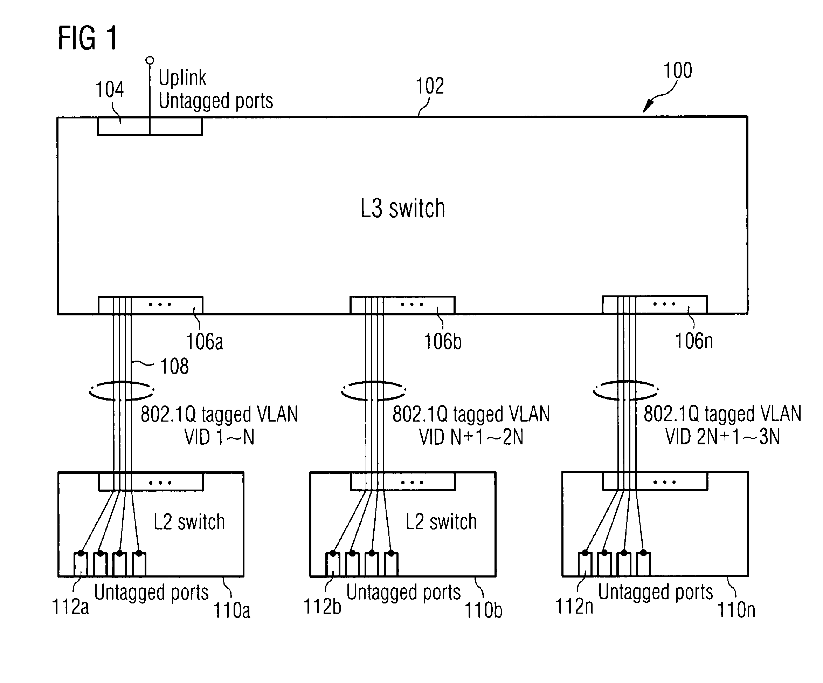

The traditional L3 VLAN configuration 100 having different VIDs (VLAN IDs) for each L3 is shown in Figure 1. In the figure, a switch 102, shown here as an L3 switch, includes an input port 104 and output ports, which may be configured as N sets of output ports 106 a-n. Each set of output ports 106 a-n is comprised of output ports 108 1-N, N+1 - 2N, 2N+1-3N, etc.

As will be clearly seen from this figure, the traditional configuration allocates different VIDs to each output port 106a-n. In the case where each output port comprises a set of output ports, each of these ports is assigned a different set of VIDs. In the example shown, the output port 106a is allocated VIDs 1-N, the output port 106b is allocated VIDs N+1 - 2N, the ouput port 106c is allocated VIDs 2N+1-3N, and so on. In the exemplary case, the output ports are tagged by 802.1Q VLAN VIDs.

The output ports 106a-n may be coupled to switches 110a-n, which may be L2 forwarding switches in this case. These switches 110a-n may further include output ports 112a-n, which in this case are untagged. Of course, other devices may be coupled to these output ports 106a-n, such as an L3 switch. VLANs or LANs may be coupled, for example, to the output ports 112a-n of the switches 110a-n.

By using a configurable switch, such as the layer 3 switch (L3) 102 or another 802.1Q-compliant switch, the VLAN configuration 100 can be set with different virtual IDs for each L3 VLAN. The advantages of a configurable LAN are well known. Instead of going to the wiring closet to move a cable to a different LAN, network administrators accomplish this task remotely by configuring a port on the switch. The ability to move end stations to different broadcast domains by setting membership profiles for each port on centrally managed switches is one of the main advantages of 802.1Q VLANs.

In this case, the switch 102 acts as an intelligent traffic forwarder and a simple network security device. Frames are sent only to the ports where the destination device is attached. Broadcast and multicast frames are constrained by VLAN boundaries so only stations whose ports are members of the same VLAN see those frames. In this manner, bandwidth is optimized and network security is enhanced. 802.1Q VLANs are not limited to one switch. VLANs can span many switches, even across WAN links. Sharing VLANs between switches is achieved by inserting a tag with a VLAN identifier (VID) between one and 4,094 into each frame. A VID must be assigned for each VLAN. By assigning the same VID to VLANs on many switches, one or more VLAN (broadcast domain) can be extended across a large network.
This is carried out by making use of the tags. 802.1Q-compliant switch ports can be configured to transmit tagged or untagged frames. A tag field containing VLAN (and/or 802.1p priority) information can be inserted into an Ethernet frame. If a port has an 802.1Q-compliant device attached (such as another switch), these tagged frames can carry VLAN membership information between switches, thus letting a VLAN span multiple switches.

The solution takes advantage of the 802.1Q IEEE standard that introduced VLAN tags, which identifies the VLAN protocol ID for one thing. When a L3 switch identifies a VLAN tag in an incoming frame, the switch uses the VLAN ID as an index into a table to determine which ports to send the frame. As pointed out above, the problem with such a traditional configuration is that the currently provided chip sets available are not capable of supporting a sufficient amount of VLANs. Despite claims to the contrary, the chipsets are often cheaply produced and provide support for a much smaller amount of VLANs in practice.

The proposed solution solves the foregoing problems by reusing the L3 VLANs. In this manner, a large number of L3 VLAN termination points may be accommodated. In deriving an answer for this problem, it was realized that the key to the solution lies with the VID. Normally, the VID differentiates each subscriber LAN at the same port. It was realized that each port does not need to be configured with different VLAN IDs. Rather, this realization lead to the solution that the VIDs may be reused to assign the various ports.

In developing this solution, however, it was quickly ascertained that the VLANs sharing the same VIDs cannot be allowed to have traffic communicating between them. Otherwise, communication between ports with the same VID would cause a networking catastrophe since the switch would not know to which port the travelling packets belong. Therefore, the present invention foresaw this problem and provides an additional manner in which to suppress traffic as between ports sharing the same VID.

Further special situations arise in this context in which the present invention needs to accommodate in order to provide a viable solution. For one thing, suppressing traffic as between VLANs sharing the same VID, would pose difficulties for broadcasted IP packets. This is in direct contradiction to principle behind the L3 forwarding capability that was designed to forward packets especially for broadcasting and replication. For other certain protocols, such as unicast, special provision must be made in order to prevent a similar forwarding of the packets to VLANs sharing the same VID. These proviso will be discussed in further detail below.

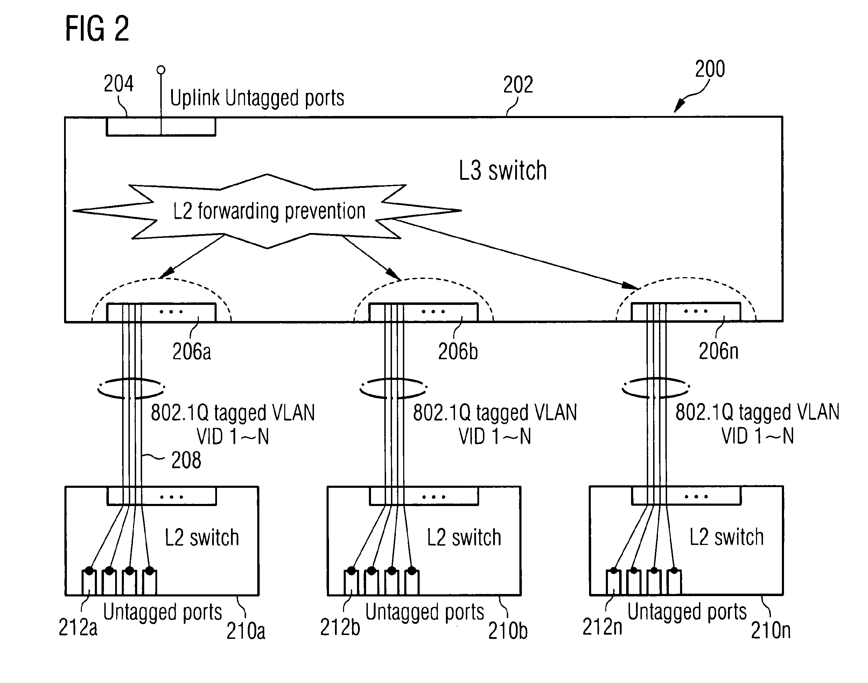

Now with respect to Figure 2, the present invention shall be described in more detail. In the figure, there is shown the exemplary switch configuration 200, wherein a switch 202, such as the L3 switch shown, includes an input port 204 and output ports 206a-n. The output ports 206a-n may be grouped in sets of ports 208 which may be coupled to switches 110a-n respectively. The switches 110a-n may be L2, or even L3 switches, for example. Untagged output ports 112a-n are shown with their respective switch 110a-n.

Now in more detail, the invention configures the switch 202 such that the output ports 206a-n, or a group of output ports, share the same VID as at least one other group. Here in the figure, for example, output ports 206a, which form a group, share the same VID as output port 206b. Indeed, the output ports 206n also share the same VID. In the figure, the VID shared by each group of output ports is shown here as VID1-N. In the exemplary embodiment, 802.1Q tags are supported, however, other configurable standards may also be utilized.

With the present invention, a large number of L3 VLAN termination points may be accommodated. Now that the VIDs are reused to assign the various ports 206a-n, the maximum number of VLANs may be connected to the switch configuration 200. It shall be appreciated that the configuration shown has some similar characteristics as a VLAN interface in a router, which is a kind of sub-interface that splits one physical port interface into multiple logical interfaces. However, the similarities end there. The present invention is unique unto itself and has the afore-described advantages.

While this configuration does not necessarily have implicit connections to the other sub-interfaces without bridging, it is usually the case with switches that the VLAN sub-interfaces at different ports with the same VID are inherently connected with built-in bridging (or L2 switching). As mentioned above, it is not advisable to couple traffic between these ports. For this reason, the invention must take extra provisions to suppress these communications.

In preventing L2 switching whilst preserving the advantageous L3 forwarding capability, the following considerations are taken into account. First, if the destination MAC address is unicast and is not an L3 switch MAC address, the invention silently discards this destination address. For another, the broadcast/multicast packet should not be forwarded, so-called flooded, to the other ports having the same VID. In this latter case, the broadcast packet should only be sent to the CPU. In order to implement the foregoing measures, an L2 access control list or rule may be implemented, for example, that limits access to those switches that have the same VID. Of course, the actual manner in carrying this suppression out will depend on the switch chipset selected.

Using the present invention, the required number of L3 VLAN can be significantly reduced. If down-link L2 switches have N subscriber ports and all of them are bundled through 802.1Q tagged VLANs to an L3 switch, and the L3 switch has M downlink ports, then the required number of L3 VLANs will be M*N. With the present invention, the required number of VLANs is only N. In other words, even if the number of L3 VLANs supported by the switching chipset is only N, the effective number of VLANs can be expanded to M*N. In addition, when the total number of L3 VLANs is over the chipset capability (4k in the traditional example used) the configuration of the present invention is still viable so long as the number of VLANs per port is not over the chipset limit. Conclusively, system-wide resource constraints can be changed to per-port constraints in the L3 VLAN case.

The present invention has been described with reference to specific embodiments. However, it shall be appreciated that the invention may be practiced otherwise than here described without deviating from the spirit and scope of the present invention.

## Claims

1. A method for configuring a switch having an input port and output ports, the output ports being configurable by assigning an ID to a respective output port corresponding to a network, **characterized in that**,
allocating a same ID to different output ports corresponding to respective networks; and
suppressing communication between those output ports sharing the same ID.

2. The method according to claim 1, further **characterized in that**, the switch is an Layer 3 switch.

3. The method according to any of the preceding claims, further **characterized in that**, at least one of the output ports are coupled to an Layer 2 switch.

4. The method according to any of the preceding claims, further **characterized in that**, the switch operates in accordance with the 802.1Q standard.

5. The method according to any of the preceding claims, further **characterized in that**, when a destination MAC address is a unicast address, discarding the destination MAC address.

6. The method according to any of the preceding claims, further **characterized in that**, suppressing broadcast IP packets from being forwarded from an output port to other ports that share the same ID.

7. The method according to any of the preceding claims, further **characterized in that**, suppressing multicast IP packets from being forwarded from an output port to other ports that share the same ID.

8. An apparatus for maximizing a number of networks connected to a switch, **characterized in that**,
a switch for switching IP packets and having an input port and output ports, the output ports corresponding to respective networks;
wherein the output ports are configurable by assigning an ID to a respective output port corresponding to a different network; and
wherein at least 2 output ports are configured to share the same ID.

9. The apparatus according to claim 8, further **characterized in that**, communication between output ports sharing the same VIDs is suppressed.

10. The apparatus according to claims 8-9, further **characterized in that**, the switch is a Layer 3 switch.

11. The apparatus according to claims 8-10, further **characterized in that**, at least one output port is coupled to a Layer 2 switch.
